(19) Europäisches Patentamt
European Patent Office
Office européen des brevets

(11) **EP 1 075 592 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(51) Int Cl.7: **F02D 41/14**, G01N 27/417

(21) Anmeldenummer: **99916806.5**

(86) Internationale Anmeldenummer:
**PCT/DE99/00784**

(22) Anmeldetag: **19.03.1999**

(87) Internationale Veröffentlichungsnummer:
**WO 99/56012 (04.11.1999 Gazette 1999/44)**

(54) **VERFAHREN ZUR ABGASREINIGUNG MIT TRIMMREGELUNG**

METHOD FOR PURIFYING WASTE GAS WITH TRIM ADJUSTMENT

PROCEDE D'EPURATION DE GAZ RESIDUAIRES A REGLAGE DE PRECISION

(84) Benannte Vertragsstaaten:
**DE FR GB**

(30) Priorität: **29.04.1998 DE 19819204**

(43) Veröffentlichungstag der Anmeldung:
**14.02.2001 Patentblatt 2001/07**

(73) Patentinhaber: **SIEMENS AKTIENGESELLSCHAFT 80333 München (DE)**

(72) Erfinder: **HEINZE, Thomas D-93173 Wenzenbach (DE)**

(56) Entgegenhaltungen:
EP-A- 0 769 694          EP-A- 0 814 249
US-A- 5 381 656          US-A- 5 499 500

• **PATENT ABSTRACTS OF JAPAN vol. 017, no. 231 (P-1532), 11. Mai 1993 (1993-05-11) & JP 04 359143 A (MITSUBISHI MOTORS CORP), 11. Dezember 1992 (1992-12-11)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Reinigung des Abgases einer Brennkraftmaschine gemäß dem Oberbegriff des Anspruchs 1.

Die EP-A-0 814 249 (Fig. 1,3,12, S. 5,6) offenbart eine Regelung des Lambda - Wertes mit einer Zweipunkt - Lambdasonde 71 stromauf des Katalysators 40. Solche Regelung führen zu Grenz-Zyklusschwingungen. Der Mittelwert des geregelten Lambdawerts wird durch eine Zweipunktsignal (Fig. 3) eines amperometrischen Meßwertaufnehmers (einer NOX-Sonde mit einem Festkörperlelektrolyten, Fig. 12) stromab des Katalysators, mit zwei verbundenen Messzellen 7,10, mit einer ersten, zweiten, Außen- und Referenz- Elektrode 2,3,11,12 beeinflußt.

Zur Reinigung des Abgases einer Brennkraftmaschine ist üblicherweise ein Drei-Wege-Katalysator im Abgastrakt der Brennkraftmaschine angeordnet. Stromauf dieses Katalysators ist eine Lambda-Sonde vorgesehen, deren abgegebenes Spannungssignal wie bei allen Lambda-Sonden abhängig von dem im Abgas enthaltenen Restsauerstoff ist. Dieser Restsauerstoffanteil wiederum hängt vom Gemisch ab, das der Brennkraftmaschine zugeführt wurde. Bei Kraftstoffüberschuß (fettes Gemisch) ist der Sauerstoffanteil im Rohabgas niederer, bei Luftüberschuß (mageres Gemisch) höher. Bei magerem Gemisch (Lambda > 1) liegt die Ausgangsspannung der Lambda-Sonde üblicherweise unter 100 mV, ändert sich im Bereich Lambda = 1 fast sprunghaft und erreicht bei fettem Gemisch (Lambda < 1) über 0,8 V; dies wird als Zweipunkt-Verhalten bezeichnet. Der Betrieb der Brennkraftmaschine erfolgt nun so, daß das den Lambda-Wert des Rohabgases wiedergebende Ausgangsignal der Lambda-Sonde um einen vorbestimmten Mittelwert schwingt. Da ein Drei-Wege-Katalysator bei einem Rohabgas mit Lambda = 1 optimale katalytische Eigenschaften zeigt, sollte dieser vorbestimmte Mittelwert Lambda = 1 entsprechen.

Die dynamischen und statischen Eigenschaften der Lambda-Sonde stromauf des Drei-Wege-Katalysators werden jedoch durch Alterung und Vergiftung verändert. Dadurch wird die Lage des Lambda = 1 entsprechenden Mittelwertes verschoben. Nach dem Stand der Technik ist es bekannt, stromab des Drei-Wege-Katalysators eine weitere, ebenfalls Zweipunkt-Verhalten zeigende, Lambda-Sonde anzuordnen, die als Monitorsonde zur Überwachung der katalytischen Umwandlung eingesetzt wird und eine Feinregulierung des Gemisches ermöglicht, indem der vorbestimmte Mittelwert so korrigiert wird, daß der für die Konvertierung günstigste Lambda-Wert eingehalten werden kann. Dieses Verfahren wird als Führungs- oder Trimmregelung bezeichnet.

Um die Schadstoffemissionen moderner Brennkraftmaschinen weiter zu vermindern, wird zusätzlich zu dem Drei-Wege-Katalysator ein $NO_x$-Katalysator vorgesehen. Zum optimalen Betrieb eines solchen Katalysators, der z.B. ein Speicherkatalysator sein kann, welcher in einem Betriebszustand $NO_x$ speichert und in einem anderen Betriebszustand der Brennkraftmaschine das gespeicherte $NO_x$ konvertiert, ist ein $NO_x$ sensitiver Meßaufnehmer vorhanden.

Es ist Aufgabe der vorliegenden Erfindung, ein Verfahren zur Abgasreinigung einer Brennkraftmaschine anzugeben, bei dem unter Beibeahltung der bekannten Trimmregelung auf die separate, stromab des Katalysators angeordnete Lambda-Sonde verzichtet werden kann.

Diese Aufgabe wird durch die Merkmale des Hauptanspruchs 1 gelöst.

Erfindungsgemäß wird stromab des Drei-Wege-Katalysators ein amperometrischer Meßaufnehmer vorgesehen, der vorzugsweise ein $NO_x$-Meßaufnehmer zum Steuern eines $NO_x$-reduzierenden Katalysators ist und zwei Meßzellen aufweist. Unter Reihenschaltung der zwei Meßzellen wird die Spannung zwischen der Außenelektrode und der Referenzelektrode des amperometrischen Meßaufnehmers abgegriffen und dadurch ein von der Sauerstoffkonzentration abhängiges, Zweipunkt-Verhalten zeigendes Signal erhalten. Dieses Zweipunkt-Verhalten zeigende Signal wird auf bekannte Weise zur Trimmregelung verwendet. Dadurch ist für den Betrieb der bekannten Trimmregelung keine separate Zweipunkt-Verhalten zeigende Lambda-Sonde stromab des Katalysators mehr erforderlich.

Vorteilhafte Ausgestaltungen der Erfindung sind in den Unteransprüchen gekennzeichnet.

Die Erfindung wird nachfolgend unter Bezugnahme auf die Zeichnung in einem Ausführungsbeispiel näher erläutert. Die Zeichnung zeigt:

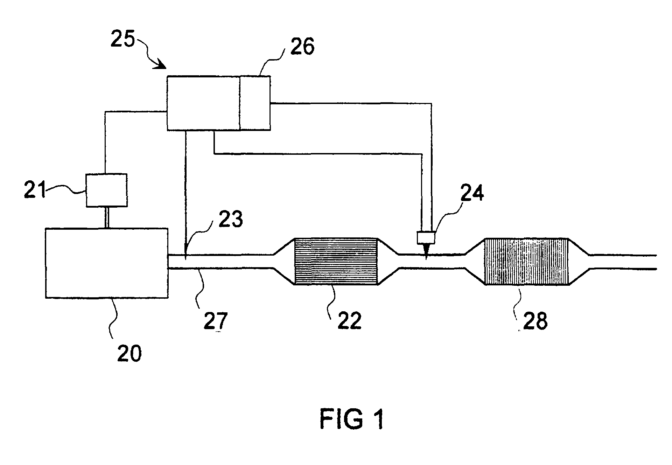

Fig. 1    eine schematische Darstellung einer Vorrichtung zur Durchführung des erfindungsgemäßen Verfahrens und

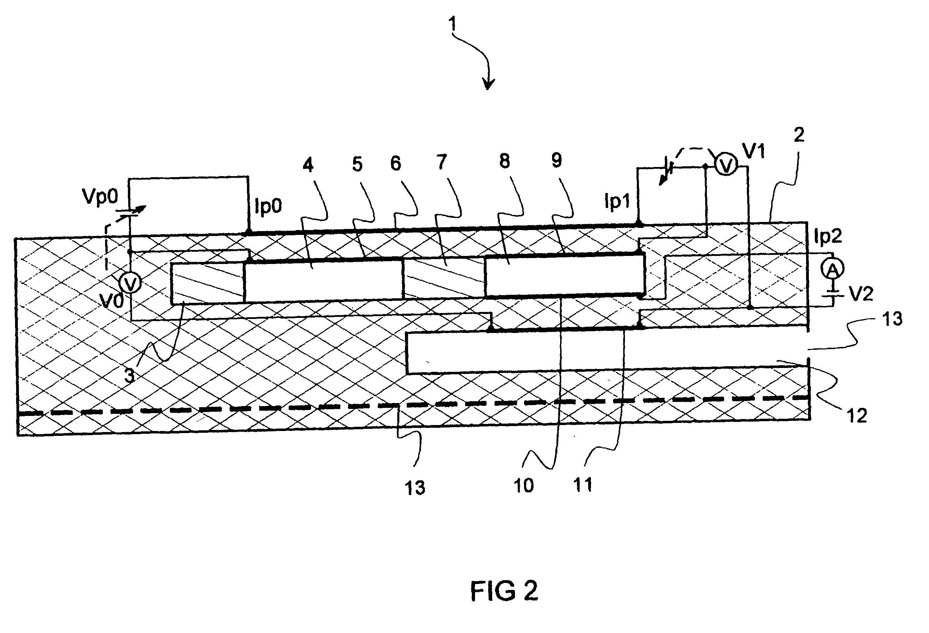

Fig. 2    eine schematische Schnittdarstellung eines amperometrischen Meßaufnehmers.

In Fig. 1 ist eine an sich bekannte Vorrichtung zur Reinigung des Abgases einer Brennkraftmaschine 20 schematisch dargestellt. Im Abgastrakt 27 der Brennkraftmaschine 20 befindet sich eine Lambda-Sonde 27 stromauf eines Drei-Wege-Katalysators 22.

Das Signal der Lambda-Sonde 23 wird einem Betriebssteuergerät 25 der Brennkraftmaschine 20 zugeführt, das ein Kraftstoffzufuhrsystem 21 so ansteuert, daß der Lambda-Wert des Abgases an der Lambda-Sonde 23 stromauf des Drei-Wege-Katalysators 22 eine Schwingung um Lambda = 1 ausführt.

Zum Ausführen einer bekannten Trimmregelung, die eine z.B. alterungsbedingte Verschiebung des Lambda = 1 entsprechenden Mittelwertes des Signals der Lambda-Sonde 23 ausgleicht, benötigt ein Trimmregler 26, der eine

**EP 1 075 592 B1**

separate Einheit oder im Betriebssteuergerät 25 integriert sein kann, ein Zweipunkt-Verhalten zeigendes, sauerstoffabhängiges Signal eines stromab des Drei-Wege-Katalysators 22 angeordneten Meßaufnehmers.

Erfindungsgemäß wird dazu ein amperometrischer Meßaufnehmer verwendet, der im Falle der Fig. 1 ein NOx-Meßaufnehmer 24 ist, der ohnehin zum Betrieb eines stromab davon angeordneten $NO_x$-reduzierenden Katalysators 28 vorhanden ist. Dieser $NO_x$reduzierende Katalysator 28 kann auch stromauf des $NO_x$-Meßaufnehmers 24 angeordnet bzw. in den Drei-Wege-Katalysator 22 integriert sein.

Dadurch wird keine separate Lambda-Sonde benötigt, wie sie im Stand der Technik üblicherweise stromab des Drei-Wege-Katalysators 22 zu diesem Zweck vorgesehen wird.

Der $NO_x$-Meßaufnehmer 24 erfüllt somit eine Doppelfunktion. Er liefert an das Betriebssteuergerät 25 ein die $NO_x$-Konzentration darstellendes Signal und an den Trimmregler 26 ein Zweipunkt-Verhalten zeigendes sauerstoffabhängiges Signal.

Dieser $NO_x$-Meßaufnehmer 24 ist in Fig. 2 unter Bezugszeichen 1 schematisch detaillierter dargestellt. Er besteht aus einem Festkörperelektrolyten, z.B. $ZrO_2$ und erhält das zu messende Abgas über eine Diffusionsbarriere 3 zugeführt. Das Abgas diffundiert durch die Diffusionsbarriere 3 in eine erste Meßzelle 4. Der Sauerstoffgehalt in der Meßzelle 4 wird mittels einer ersten Nernstspannung V0 zwischen einer ersten Elektrode 5 und einer Umgebungsluft ausgesetzten Referenzelektrode 11 gemessen. Die Elektrode 5 kann auch mehrteilig bzw. mit mehreren Abgriffen ausgeführt sein. Beide Elektroden sind herkömmliche Platinelektroden. Die Referenzelektrode 11 ist in einem Luftkanal 12 angeordnet, in den über eine Öffnung 13 Umgebungsluft gelangt. Der Meßwert der ersten Nernstspannung V0 wird dazu verwendet, eine Stellspannung Vp0 einzustellen. Die Stellspannung Vp0 treibt einen ersten Sauerstoff-Ionen-Pumpstrom Ip0 durch den Festkörperelektrolyten 2 zwischen der ersten Elektrode 5 und einer Außenelektrode 6. Der durch eine gestrichelte Linie dargestellte Regeleingriff der ersten Nernstspannung V0 auf die Stellspannung Vp0 hat zur Folge, daß der Sauerstoff-Ionen-Pumpstrom Ip0 so eingestellt wird, daß in der ersten Meßzelle 4 eine vorbestimmte Sauerstoffkonzentration vorliegt.

Die erste Meßzelle 4 ist mit einer zweiten Meßzelle 8 über eine weitere Diffusionsbarriere 7 verbunden. Durch diese Diffusionsbarriere 7 diffundiert das in der Meßzelle 4 vorhandene Gas. Aufgrund der Diffusion stellt sich in der zweiten Meßzelle 8 eine entsprechend niedrigere zweite Sauerstoffkonzentration ein. Diese zweite Sauerstoffkonzentration wird wiederum über eine Nernstspannung V1 zwischen einer zweiten Elektrode 9, die ebenfalls eine herkömmliche Platinelektrode ist, und der Referenzelektrode 11 gemessen und zur Regelung eines zweiten Sauerstoff-Ionen-Pumpstroms Ip1 verwendet. Der zweite Sauerstoff-Ionen-Pumpstrom Ip1 aus der ersten Meßzelle 8 fließt von der zweiten Elektrode 9 durch den Festkörperelektrolyten 2 hindurch zur Außenelektrode 6. Mit Hilfe der zweiten Nernstspannung V1 wird der zweite Sauerstoff-Ionen-Pumpstrom Ip1 so eingeregelt, daß in der zweiten Meßzelle 8 eine vorbestimmte geringe, zweite Sauerstoffkonzentration vorliegt.

Das von den bisherigen Vorgängen in den Meßzellen 1 und 2 nicht betroffene $NO_x$ wird nun an der Meßelektrode 11, die katalytisch wirksam ausgestaltet ist, unter Anlegen der Spannung V2 zersetzt und der freigewordene Sauerstoff als Maß für die $NO_x$-Konzentration der Meßzelle 8 und damit im zu messenden Abgas in einem dritten Sauerstoff-Ionen-Pumpstrom Ip2 zur Referenzelektrode 11 hin gepumpt.

In der ersten Meßzelle 4 entsteht folgende Spannung:

$$U_{\text{erste Meßzelle}} = RT/(4F) \cdot (\ln P_{02,\text{erste Meßzelle}} - \ln P_{02,\text{Abgas}})$$

$$+ R0 \cdot Ip0 \tag{I},$$

wobei $P_{02,\text{erste Meßzelle/Abgas}}$ der Sauerstoffpartialdruck in der ersten Meßzelle bzw. dem Abgas, R die Gaskonstante, T die absolute Gastemperatur, F die Faraday-Konstante, R0 ein Übergangswiderstand zwischen der ersten Elektrode 5 und dem Festkörperelektrolyten 2 und Ip0 der erste Sauerstoff-Ionen-Pumpstrom ist.

In der zweiten Meßzelle ergibt sich folgende Spannung:

$$U_{\text{zweite Meßzelle}} = RT/(4F) \cdot (\ln P_{02,\text{Umgebungsluft}}$$

$$- \ln P_{02,\text{zweite Meßzelle}}) \tag{II},$$

wobei $P_{02,\text{Umgebungsluft/zweite Meßzelle}}$ der Sauerstoffpartialdruck in der Umgebungsluft bzw. der zweiten Meßzelle ist.

Durch Abgriff der Differenzspannung zwischen der Außenelektrode 6 und der Referenzelektrode 11 werden die beiden Meßzellen 4 und 8 in Reihe geschaltet, so daß sich in erster Näherung bei hinreichend homogener Temperatur des Meßaufnehmers 1, hinreichend geringem Strom Ip0 und hinreichend gleichem Sauerstoffpartialdruck an den Abgriffen der inneren Elektrode 5 folgende Beziehung ergibt:

$$U_{Zweipunkt} = RT/(4F).(\ln P_{02,Umgebungsluft} - \ln P_{02,zweite\ Meßzelle}$$

$$+ \ln P_{02,erste\ Meßzelle} - \ln P_{02,Abgas})$$

$$= RT/(4F).(\ln P_{02,Umgebungsluft} - \ln P_{02,Abgas}) \qquad (III)$$

Diese Beziehung beschreibt das Zweipunkt-Verhalten einer Lambda-Sonde. Deshalb kann die Differenzspannung zwischen der Außenelektrode 6 und der Referenzelektrode 11 als das oben erwähnte Zweipunkt-Verhalten zeigende Signal verwendet werden, das das im Stand der Technik üblicherweise verwendete Signal einer Nachkat-Lambdasonde ersetzt.

Der durch den Übergangswiderstand R0 in Gleichung I verursachte Meßfehler bei der Spannung an der ersten Meßzelle 4 kann vorzugsweise korrigiert werden, indem ein bestimmter Widerstandswert angenommen wird und eine Ip0 abhängige Kompensation durchgeführt wird. Weiter kann vorzugsweise eine Korrektur des Signals hinsichtlich der Temperatur des Meßaufnehmers erfolgen.

**Patentansprüche**

1. Verfahren zur Reinigung des Abgases einer Brennkraftmaschine mit einem im Abgastrakt angeordneten Drei-Wege-Katalysator und einer stromauf des Katalysators angeordneten, Zweipunkt-Verhalten aufweisenden Lambda-Sonde, bei dem

   - die Regelung des Betriebs der Brennkraftmaschine so erfolgt, daß der Lambda-Wert des Rohabgases an der Lambda-Sonde um einen vorbestimmten Mittelwert schwingt,
   - in einer Trimmregelung die Konzentration einer Abgaskomponente stromab des Drei-Wege-Katalysators mittels eines weiteren Meßaufnehmers gemessen wird und
   - in Abhängigkeit hiervon der vorbestimmte Mittelwert korrigiert wird,

   wobei als weiterer Meßaufnehmer ein amperometrischer Meßaufnehmer (1) aus einem Festkörperelektrolyten (2) verwendet wird, der

   - eine erste Meßzelle (4) aufweist, in der die Sauerstoffkonzentration über eine erste Nernstspannung (V0) zwischen einer ersten Elektrode (5) und einer Umgebungsluft ausgesetzten Referenzelektrode (11) gemessen und mittels eines ersten Sauerstoff-Ionen-Pumpstromes (Ip0) zwischen der ersten Elektrode (5) und einer Außenelektrode (6) geregelt wird, und **dadurch gekennzeichnet, daß**
   - der meßaufnehmer eine zweite Meßzelle (8) aufweist, die mit der ersten Meßzelle verbunden ist und in der die Sauerstoffkonzentration über eine zweite Nernstspannung (V1) zwischen einer zweiten Elektrode (9) und der Referenzelektrode (11) gemessen, und
   - daß unter Reihenschaltung der zwei Meßzellen (4, 8) die Spannung zwischen der Außenelektrode (6) und der Referenzelektrode (11) abgegriffen wird und dieses von der Sauerstoffkonzentration abhängige, Zweipunkt-Verhalten zeigende Signal für die Trimmregelung verwendet wird.

2. Verfahren nach Anspruch 1, **dadurch gekennzeichnet, daß** der weitere Meßaufnehmer eine $NO_x$-Meßaufnehmer (1) ist, in dessen zweiter Meßzelle (8) mittels eines zweiten Sauerstoff-Ionen-Pumpstroms (Ip1) die Sauerstoffkonzentration in der zweiten Meßzelle (8) geregelt wird.

3. Verfahren nach einem der vorhergehenden Ansprüche, **dadurch gekennzeichnet, daß** abhängig vom ersten Sauerstoff-Ionen-Pumpstrom (Ip0) eine Korrektur des Zweipunkt-Verhalten zeigenden Signals erfolgt, um eine Fehlerspannung, die von einem vom ersten Sauerstoff-Ionen-Pumpstrom (Ip0) durchflossenen Übergangswiderstand (R0) herrührt, auszugleichen.

4. Verfahren nach einem der vorherigen Ansprüche, **dadurch gekennzeichnet, daß** das von der Sauerstoffkonzentration abhängige, Zweipunkt-Verhalten zeigende Signal abhängig von der Temperatur des Meßaufnehmers (1) korrigiert wird.

**EP 1 075 592 B1**

**Claims**

1. Method for controlling the exhaust emission of an internal combustion engine, having a three-way catalytic converter arranged in the emission tract, and a lambda probe, which is arranged upstream of the catalytic converter and exhibits two-step action, in the case of which

   - the operation of the internal combustion engine is controlled such that the lambda value of the raw emission at the lambda probe fluctuates about a predetermined mean value,
   - in a trimming controller, the concentration of an emission component downstream of the three-way catalytic converter is measured by means of a further measuring sensor, and
   - the predetermined mean value is corrected as a function thereof,
     in which use is made as further measuring sensor of an amperometric measuring sensor (1) which is made from a solid-state electrolyte (2) and which
   - has a first measuring cell (4), in which the oxygen concentration is measured by a first Nernst voltage (V0) between a first electrode (5) and a reference electrode (11) exposed to ambient air, and is controlled by means of a first oxygen-ion pumping current (Ip0) between the first electrode (5) and an outer electrode (6), **characterized in that**
   - the measuring sensor has a second measuring cell (8), which is connected to the first measuring cell and in which the oxygen concentration is measured via a second Nernst voltage (V1) between a second electrode (9) and the reference electrode (11), and
   - **in that** the voltage between the outer electrode (6) and the reference electrode (11) is tapped in conjunction with series connection of the two measuring cells (4, 8), and this signal, which depends on the oxygen concentration and indicates two-step action, is used for the trimming control.

2. Method according to Claim 1, **characterized in that** the further measuring sensor is an $NO_x$ measuring sensor (1) in whose second measuring cell (8) the oxygen concentration in the second measuring cell (8) is controlled by means of a second oxygen-ion pumping current (Ip1).

3. Method according to one of the preceding claims, **characterized in that** as a function of the first oxygen-ion pumping current (Ip0), the signal indicating two-step action is corrected in order to compensate for the fault voltage caused by a contact resistance (R0) over which the first oxygen-ion pumping current (Ip0) flows.

4. Method according to one of the preceding claims, **characterized in that** the signal depending on the oxygen concentration and indicating two-step action is corrected as a function of the temperature of the measuring sensor (1).

**Revendications**

1. Procédé de purification des gaz d'échappement d'un moteur à combustion interne comportant un catalyseur trifonctionnel disposé dans le trajet de gaz d'échappement et une sonde lambda présentant un comportement à deux états disposée en amont du catalyseur, selon lequel

   - la régulation du fonctionnement du moteur à combustion interne a lieu d'une manière telle que la valeur lambda des gaz d'échappement non traités à l'endroit de la sonde lambda fluctue autour d'une valeur moyenne préfixée,
   - dans une régulation de compensation, la concentration d'un composant des gaz d'échappement en aval du catalyseur trifonctionnel est mesurée au moyen d'un second capteur de mesure et,
   - en fonction de cela, la valeur moyenne préfixée est corrigée,
   - tandis qu'un capteur de mesure ampérométrique (1) constitué d'un électrolyte solide (2) est utilisé en tant que second capteur de mesure et
   - comprend une première cellule de mesure (4) dans laquelle la concentration d'oxygène est mesurée au moyen d'une première tension de Nernst (V0), entre une première électrode (5) et une électrode de référence (11) soumise à l'air environnant, et fait l'objet d'une régulation au moyen d'un premier courant de pompage d'ions oxygène (Ip0) entre la première électrode (5) et une électrode extérieure (6), **caractérisé**
   - **en ce que** le capteur de mesure comprend une seconde cellule de mesure (8) qui est reliée à la première cellule de mesure et dans laquelle la concentration d'oxygène est mesurée au moyen d'une seconde tension de Nemst (V1) entre une seconde électrode (9) et l'électrode de référence (11), et

- **en ce que**, avec une connexion en série des deux cellules de mesure (4, 8), la tension entre l'électrode extérieure (6) et l'électrode de référence (11) est prélevée et ce signal dépendant de la concentration d'oxygène, manifestant un comportement à deux points de réglage, est utilisé pour la régulation de compensation.

2. Procédé suivant la revendication 1, **caractérisé en ce que** le second capteur de mesure est un capteur de mesure de NOx (1) dans la seconde cellule de mesure (8) duquel la concentration d'oxygène fait l'objet d'une régulation au moyen d'un second courant de pompage d'ions oxygène (Ip1).

3. Procédé suivant l'une des revendications précédentes, **caractérisé en ce qu'**une correction du signal manifestant un comportement à deux points de réglage a lieu en fonction du premier courant de pompage d'ions oxygène (Ip0), afin de compenser une tension entachée d'erreur qui provient d'une résistance de contact (R0) traversée par le premier courant de pompage d'ions oxygène (Ip0).

4. Procédé suivant l'une des revendications précédentes, **caractérisé en ce que** le signal dépendant de la concentration d'oxygène, manifestant un comportement à deux points de réglage, est corrigé en fonction de la température du capteur de mesure (1).

FIG 1

FIG 2

EP 1 075 592 B1